# EUROPEAN PATENT APPLICATION

(11) **EP 4 806 816 A1**
(43) Date of publication of application: **16.09.2026**
(21) Application number: 25162733.7
(22) Date of filing: 10.03.2025
(51) Int. Cl.: B65G 65/23, B64F 1/32

(54) **A BAGGAGE UNLOADER**

(71) Applicant: Ingenieursbureau Moderniek B.V., 3762 EV Soest (NL)
(72) Inventor: Nijmeijer, Jan-Simon, 3768 GV Soest (NL)
(74) Representative: De Vries & Metman

(57) **Abstract**

A baggage unloader (1) comprises a frame (2) and a baggage container (5) including an upper side (6) and at least a discharge opening (8) at a front side (7) thereof. The baggage container (5) is provided with a cover (9), e.g. a flexible sheet (9), for closing at least a part of the discharge opening (8), the cover (9) being placeable on the upper side (6), or with a tiltable rigid lid (17) for covering an opening of the baggage container which rigid lid (17) projects outwardly from the baggage container (5) in an open position of the rigid lid (17). The baggage unloader (1) comprises a platform (3) for receiving the baggage container (5) thereon, which platform (3) is mounted to the frame (2) and rotatable with respect to the frame (2) between a horizontal position and an inclined position about an axis of rotation (4) which extends at a discharge side of the platform (3). The baggage container (5) is transferable to and from the platform (3) and lockable to the platform (3) in a position in which the discharge opening (8) is located at the discharge side so as to be able to rotate the platform (3) and the baggage container (5) together. The platform (3) is provided with a holder (10) for holding the rigid lid (17) in its open position or the cover (9) at the upper side (6) of the baggage container (5) when the platform (3) including the baggage container (5) are rotated together. During rotation of the platform (3) and the baggage container (5) the holder (10) and the baggage container (5) move within imaginary first and second circles (C1, C2) about the axis of rotation (4), respectively. The radius of the first circle (C1) is smaller than 1.2 or 1.1 times the radius of the second circle (C2).

## Description

The present invention relates to a baggage unloader, comprising a frame, a baggage container including an upper side and at least a discharge opening at a front side thereof, wherein the baggage container is provided with a cover, e.g. a flexible sheet, for closing at least a part of the discharge opening, the cover being placeable on the upper side, or with a tiltable rigid lid for covering an opening of the baggage container which rigid lid projects outwardly from the baggage container in an open position of the rigid lid, a platform for receiving the baggage container thereon, which platform is mounted to the frame and rotatable with respect to the frame between a horizontal position and an inclined position about an axis of rotation which extends at a discharge side of the platform, wherein the baggage container is transferable to and from the platform and lockable to the platform in a position in which the discharge opening is located at the discharge side so as to be able to rotate the platform and the baggage container together, wherein the platform is provided with a holder for holding the rigid lid in its open position or the cover at the upper side of the baggage container when the platform including the baggage container are rotated together, wherein during rotation of the platform and the baggage container the holder and the baggage container move within imaginary first and second circles about the axis of rotation, respectively.

Such a baggage unloader is known from PCT/NL2024/050449. The known baggage unloader is able to unload baggage containers which are typically applied in aeroplanes. The baggage containers are transported from an aeroplane to a baggage handling hall where they are emptied by the baggage unloader. In practice, there is a demand for using baggage handling spaces efficiently in order to allow an increase of total baggage flow within a limited space.

An object of the invention is to provide a space-saving baggage unloader.

This object is accomplished with the baggage unloader according to the invention which is characterized in that the radius of the first circle is smaller than 1.2 or 1.1 times the radius of the second circle.

An advantage of the invention is that the required installation height of the baggage unloader to allow a tilting movement of the platform and the baggage container is relatively small. This means that the ceiling of a baggage handling hall can be relatively low.

Under operating conditions, when the platform and the baggage container are tilted, baggage articles in the baggage container may pass the discharge opening at the front side of the baggage container. When the baggage container is provided with the tiltable rigid lid the rigid lid may cover at least an opening at the upper side of the baggage container in a closed position thereof. When the platform and this type of the baggage container are tilted, baggage articles may pass both the discharge opening at the front side and the opening at the upper side of the baggage container.

In case the baggage container is provided with the cover, the radius of the second circle may be defined by a rim between the upper side and a back side of the baggage container. This means that the rim is located furthest away from the axis of rotation. The cover may be a flexible sheet or net which can be laid onto the upper side of the baggage container, but it may also be a tiltable rigid element which can be placed on the upper side of the baggage container and can close at least a part of the discharge opening.

In case the baggage container is provided with the tiltable rigid lid, the radius of the second circle may be defined by a free end of the outwardly projecting rigid lid in its open position. This means that the free end of the open rigid lid is furthest away from the axis of rotation, i.e. further than a rim between its upper side and back side.

It is noted that in the present disclosure the word baggage includes all kind of articles or products. For example, the baggage container also includes a post container, parcel container or the like.

The radius of the first circle may be even smaller than the radius of the second circle. This means that the dimensions of the baggage container define the installation height that is required for operating the baggage unloader.

The holder may have a holding element for engaging the cover or the rigid lid. The holding element may be located beyond the upper side of the baggage container as seen from the platform.

Preferably, the holding element is displaceable with respect to the platform, which provides the opportunity to handle baggage containers of different dimensions. The holding element may be displaceable with respect to the platform such that it allows the baggage container to pass easily to and/or from the platform. In this case the holding element can be displaced to engage the cover or the rigid lid before tilting the platform and the baggage container so as to keep the first circle relatively small.

The holding element may be displaceable with respect to the platform in a direction perpendicular to the platform. This means in vertical direction when the platform has a horizontal position. This allows the holding element to clamp the cover against the upper side of the baggage container.

Preferably, the holding element is shaped such that the rigid lid hooks behind the holding element during tilting the platform, since this is a relatively simple means to hold the rigid lid.

In an embodiment the holder is provided with a post which extends upwardly from the platform at a distance from the axis of rotation and the holding element is provided at a distance from an upper end of the post in a direction towards the discharge side of the platform through a support which is mounted to the post, wherein preferably the support comprises a curved support which has a height which increases in a direction from the post. The curvature provides the opportunity to make the imaginary first circle relatively small with respect to the imaginary second circle. It is noted that the curved support also includes a support which is kinked, inclined or the like, as long as the curvature is such that the radius between the axis of rotation and the support is minimized. Although an entirely horizontal support which is mounted to a vertical post is still possible, it creates a corner including a right angle at a relatively large distance from the axis of rotation, which may result in a relatively large radius of the first circle, which is undesired in terms of installation height.

The support may be movable along the post between a lower position and an upper position so as to displace the holding element with respect to the platform in a direction perpendicular to the platform. This means that when the platform is in the horizontal position the baggage container can be transferred to and/or from the platform along the axis of rotation without touching the support in a lifted condition thereof.

The support may extend at least partly beyond the baggage container in its lower position as seen from the baggage container in a direction along the axis of rotation. This means that the baggage container would touch the support in a lower position thereof when being transferred to and/or from the platform along the axis of rotation. However, due to the position of the support in its lower position when the platform is tilted the imaginary first circle is relatively small with respect to the imaginary second circle.

The rigid lid may be tiltable between the open position and a closed position about a tilting axis which is parallel to the axis of rotation of the platform. The tilting axis may be located at the upper side of the baggage container, for example halfway between the front side and a back side of the baggage container.

The rigid lid may close at least an opening at an upper side of the baggage container in its closed position.

Preferably, the baggage container is transferable to and from the platform in a direction parallel to the axis of rotation, since this provides the opportunity to transport the container to and from the platform in the same direction, which is an efficient method.

The holder may be provided with at least a retaining member for engaging the front side of the baggage container. An advantage of this feature is that the retaining member can minimize deformation of the baggage container during tilting the platform and the baggage container if the structure of the baggage container is relatively weak.

The retaining member may be moveable with respect to the platform in a direction to and from the front side of the baggage container. In this case the retaining member can be displaced in a direction away from the front side so as to provide space for moving the baggage container to and/or from the platform.

The invention will hereafter be elucidated with reference to very schematic drawings showing embodiments of the invention by way of example.
Fig. 1 is a perspective view of an embodiment of a baggage unloader according to the invention.
Fig. 2 is a side view of the embodiment as shown in Fig. 1.
Fig. 3 is a similar view as Fig. 2, illustrating a different condition of the baggage unloader.
Fig. 4 is a similar view as Figs. 2 and 3, illustrating a still different condition of the baggage unloader.
Fig. 5 is a similar view as Fig. 4, illustrating the baggage unloader under operating conditions.
Fig. 6 is a similar view as Fig. 1, showing an alternative embodiment of the baggage unloader.
Fig. 7 is a side view of the embodiment as shown in Fig. 6.
Fig. 8 is a similar view as Fig. 7, illustrating the baggage unloader under operating conditions.
Fig. 9 is a similar view as Fig. 6, showing another alternative embodiment of the baggage unloader.
Fig. 10 is a similar view as Fig. 9, illustrating baggage which is transported after tilting the baggage container.
Fig. 11 is a top view of the embodiment as shown in Fig. 10.

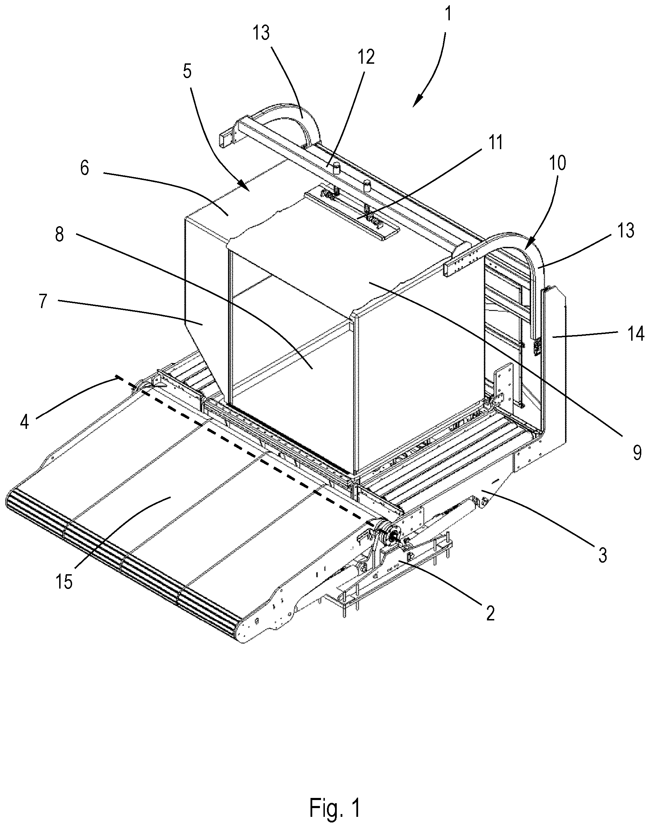

Figs. 1-5 show an embodiment of a baggage unloader 1 according to the invention. The baggage unloader 1 comprises a frame 2 and a platform 3. The platform 3 is rotatable with respect to the frame 2 between a horizontal position and an inclined position about an axis of rotation 4. The axis of rotation 4 extends at a discharge side of the platform 3.

The baggage unloader 1 also comprises a baggage container 5. The baggage container 5 has an upper side 6 and a front side 7. A discharge opening 8 is located at its front side 7. The baggage container 5 is transferable to and from the platform 3 in a direction parallel to the axis of rotation 4 by input and output conveyors (not shown) which are aligned to the platform 3. A bottom edge of the baggage container 5 is lockable to the platform 3 in a position in which the discharge opening 8 is located at the discharge side so as to be able to rotate the platform 3 and the baggage container 5 together. When the platform 3 and the baggage container 5 are rotated baggage can leave the baggage container 5 through the discharge opening 8.

It is noted that the baggage containers 5 are typically used in aeroplanes and may contain bags, suitcases etc., but alternative baggage like parcels or post is conceivable as well. The loaded baggage containers 5 can be transported from the aeroplane to the platform 3.

The baggage container 5 of the embodiment as shown in Fig. 1 has a cover in the form of a flexible sheet 9 for closing the discharge opening 8 in order to protect the baggage against rain when the baggage container 5 is transported outside, for example to or from an aeroplane. In the condition as shown in Fig. 1 the flexible sheet 9 is laid on the upper side 6 of the baggage container 5. This allows baggage in the baggage container 5 to freely pass the discharge opening 8.

The platform 3 is provided with a holder 10 for holding the flexible sheet 9 at the upper side 6 of the baggage container 5 when the platform 3 including the baggage container 5 are rotated. The holder 10 comprises a plate-shaped holding element 11 which engages the flexible sheet 9. The holding element 11 is resiliently mounted to a beam 12 which extends parallel to the axis of rotation 4. Opposite ends of the beam 12 are fixed to respective curved supports 13. The curved supports 13 are movably mounted to respective posts 14 which in turn are fixed to the platform 3. The posts 14 extend perpendicularly to the platform 3 at a distance from the axis of rotation 4, i.e. at a free end of the platform 3.

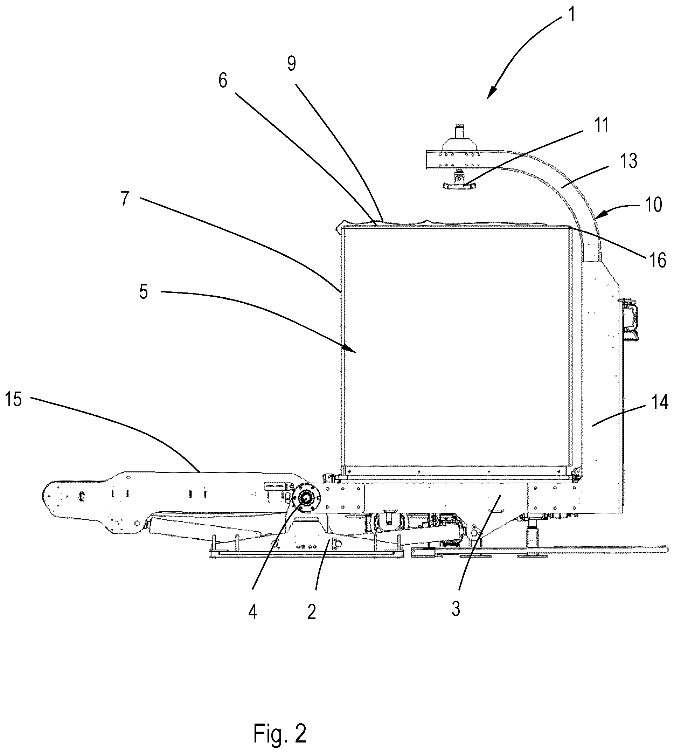

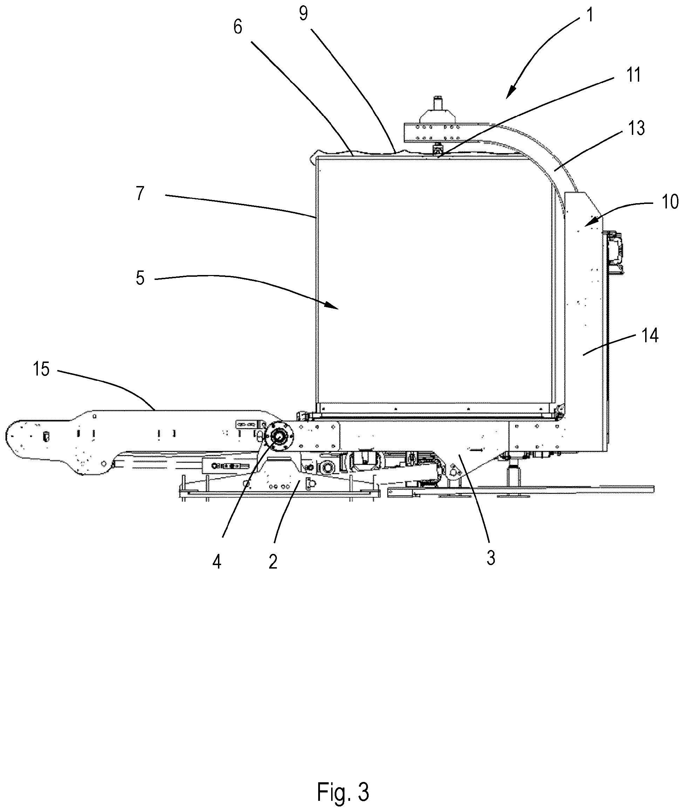

The curved supports 13 are located at a distance from each other in a direction parallel to the axis of rotation 4. The distance is larger than the length of the baggage container 5 in a direction parallel to the axis of rotation 4. The holding element 11, the beam 12 and a part of the curved supports 13 are located beyond the upper side 6 of the baggage container 5 as seen from the platform 3. The curved supports 13 of the holder 10 are displaceable along the posts 14 so as to allow the baggage container 5 to be transferred to and from the platform 3 without touching the curved supports 13 when these are in a lifted position and to allow the holder 10 to sandwich the flexible sheet 9 between the holding element 11 and the upper side 6 of the baggage container 5 in a lower position of the curved supports 13. The lifted position of the curved supports 13 is illustrated in Fig. 2 and the lower position is illustrated in Fig. 3. Fig. 3 shows that in the latter position the curved supports 13 are located at opposite sides of the baggage container 5 in a direction parallel to the axis of rotation 4. In an alternative embodiment (not shown) the holder 10 may have differently shaped supports which are not curved, but still movable to a lower position in which they are located at opposite sides of the baggage container 5 in a direction parallel to the axis of rotation 4.

Fig. 1 shows that a series of four conveyor belts 15 are located next to the platform 3 at its discharge side. The conveyor belts 15 are drivable independently from each other. One or more of the conveyor belts 15 may be driven in opposite directions. This may be advantageous in case of an automatic baggage separating system; for example, sticking baggage articles may be separated from each other by temporarily reversing one or more of the conveyor belts 15. The conveyor belts 15 are mounted to the frame 2 and rotatable with respect to the frame 2 about the axis of rotation 4, as well. In this case the conveyor belts 15 are coupled to each other to rotate them simultaneously, but in an alternative embodiment the conveyor belts 15 may be rotatable independently from each other.

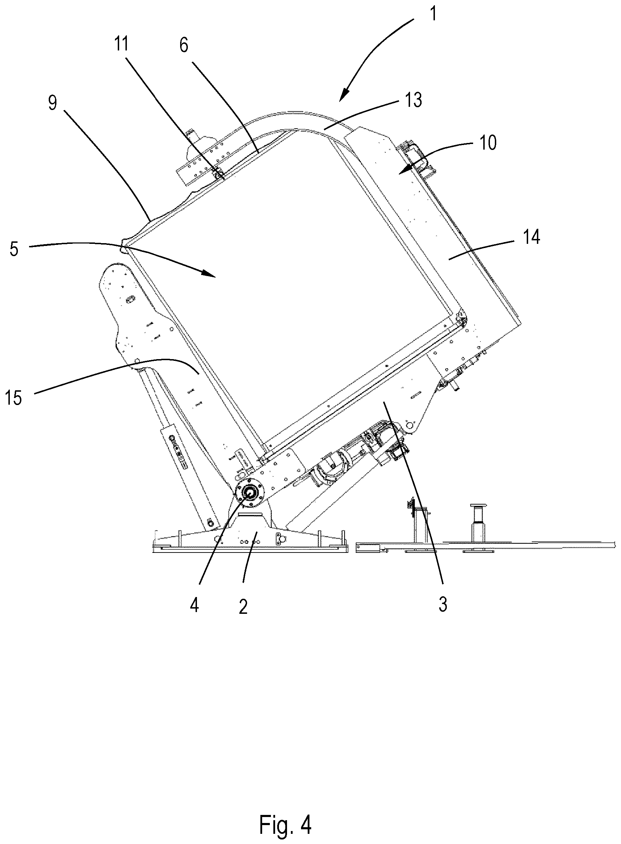

Before baggage is discharged from the baggage container 5 the conveyor belts 15 are rotated upwardly against or almost against the front side 7 of the baggage container 5 such that they close the discharge opening 8 in order to prevent the baggage from prematurely leaving the baggage container 5 and to prevent the baggage container 2 from deformation during rotation thereof. Subsequently, the platform 3 and the conveyor belts 15 are rotated simultaneously about the axis of rotation 4. This condition is illustrated in Fig. 4. The flexible sheet 9 is held by the holder 10 during rotation of the platform 3 and the conveyor belts 15.

After reaching a predefined angle the conveyor belts 15 and the platform 3 will be rotated with respect to each other in opposite directions such that the baggage can leave the baggage container 5 caused by gravity and arrives onto the conveyor belts 15 which in turn will transport the baggage further away from the baggage unloader 1. After emptying the baggage container 5 the platform 3 can be rotated back to its horizontal position, the curved supports 13 can be lifted and the baggage container 5 can be transported away from the platform 3.

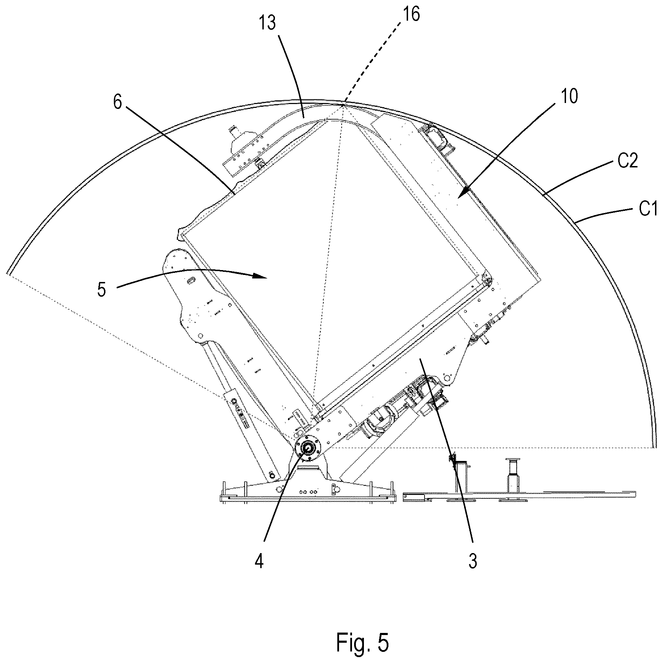

An advantage of the baggage unloader 1 as shown in Figs. 1-5 is that it requires a relatively low installation height because of the shape and dimensions of the holder 10, in particular the curvature and the displaceability of the curved supports 13 of the holder 10. This is illustrated in Fig. 5. During rotation of the platform 3 and the baggage container 5, when the curved supports 13 are in the lower position, the holder 10 moves within an imaginary first circle C1 about the axis of rotation 4, whereas the baggage container 5 moves within an imaginary second circle C2. The radius of the first circle C1 is defined by the distance between the axis of rotation 4 and a distal end of the holder 10 remote from the axis of rotation 4. The radius of the second circle C2 is defined by the distance between the axis of rotation 4 and a distal end of the baggage container 5 remote from the axis of rotation 4. The distal end remote from the axis of rotation 4 of the type of baggage container 5 as shown in Figs. 1-5 is a rim 16 between the upper side 6 and a back side of the baggage container 5 opposite to its front side 7. The radius of the first circle C1 is smaller than 1.2 times the radius of the second circle C2, in this case they are almost the same.

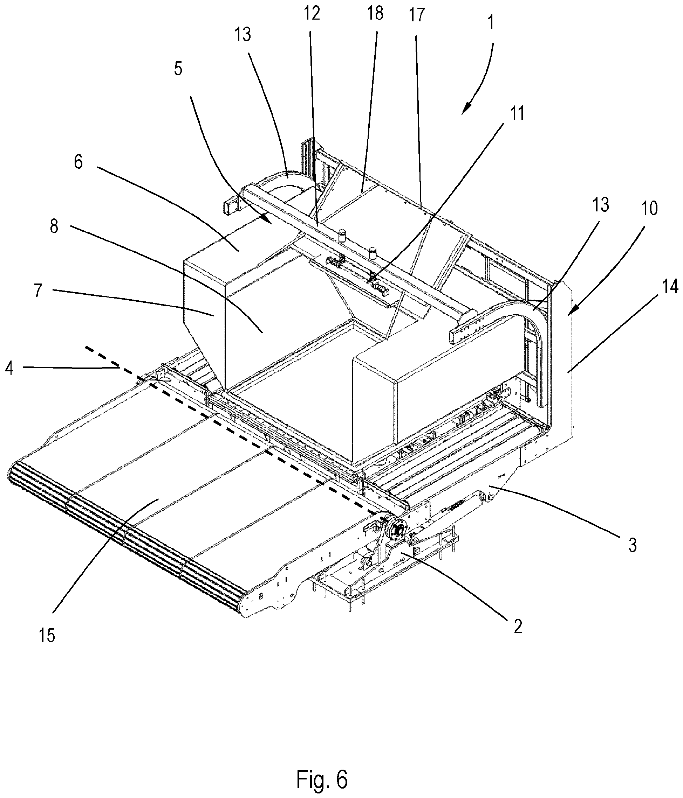

Figs. 6-8 show an alternative embodiment of the baggage unloader 1 according to the invention. Parts which correspond to parts in the embodiment as shown in Figs. 1-5 have the same reference signs. The platform 3, the frame 2, the holder 10 and the conveyor belts 15 are the same in both embodiments, but the baggage container 5 in the embodiment as shown in Figs. 6-8 is different in that it has a tiltable rigid lid 17 which has an open position in which it projects outwardly from the baggage container 5 and a closed position in which it rests on the upper side 6 and covers an opening in the upper side 6. In the latter position the rigid lid 17 is substantially parallel to the upper side 6. It is held in the open position through ropes 18, on the one hand, and through the beam 12 of the holder 10, on the other hand. During tilting the baggage container 5 and the platform 3 the rigid lid 17 may rest against the beam 12. Hence, the beam 12 forms the holding element in this case.

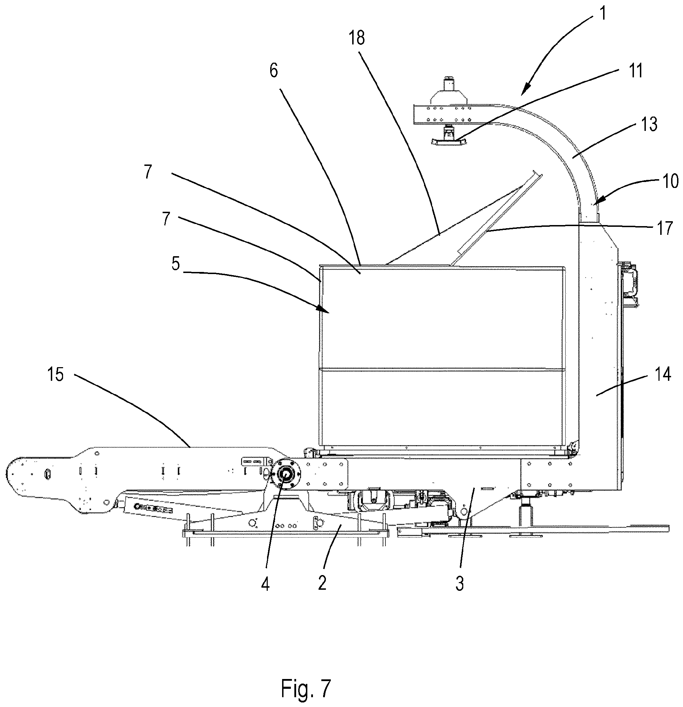

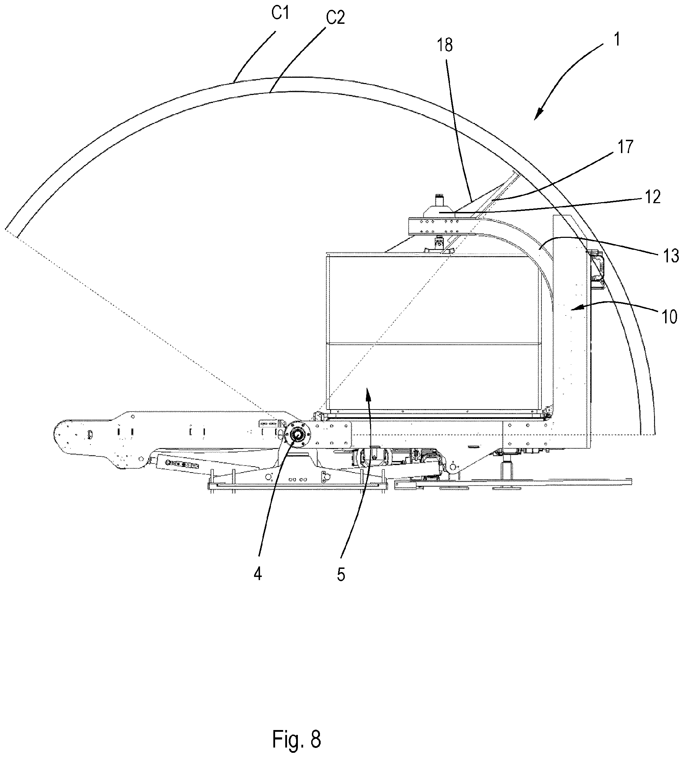

Fig. 7 shows that in the lifted position of the curved supports 13 the baggage container 5 can be transferred to and from the platform 3 without touching the holder 10, whereas the rigid lid 17 is in its open position. When the baggage container 5 is placed on the platform 3 and the curved supports 13 are displaced to the lower position the beam 12 arrives between the rigid lid 17 and the axis of rotation 4 as seen in horizontal direction, see Fig. 8. In other words, the rigid lid 17 passes through an opening between the beam 12 and the posts 14 upon lowering the curved supports 13. This means that the holding element in the form of the beam 12 is shaped such that the rigid lid 17 hooks behind the beam 12 during tilting the platform 3.

Similar to the embodiment as shown in Fig. 5, Fig. 8 illustrates that during rotation of the platform 3 and the baggage container 5, when the curved supports 13 are in the lower position, the holder 10 moves within an imaginary first circle C1 about the axis of rotation 4, whereas the baggage container 5 moves within an imaginary second circle C2. The radius of the first circle C1 is defined by the distance between the axis of rotation 4 and a distal end of the holder 10 remote from the axis of rotation 4. The radius of the second circle C2 is defined by the distance between the axis of rotation 4 and a distal end of the baggage container 5 remote from the axis of rotation 4, in this case a free end of the outwardly projecting rigid lid 17. Since the radius of the first circle C1 is smaller than 1.2 times the radius of the second circle C2, a relatively low installation height is required.

It is noted that the holder 10 is not only suitable for effectively discharging both types of baggage containers 5 as shown in Figs. 1-8. Numerous alternative types of baggage containers are conceivable.

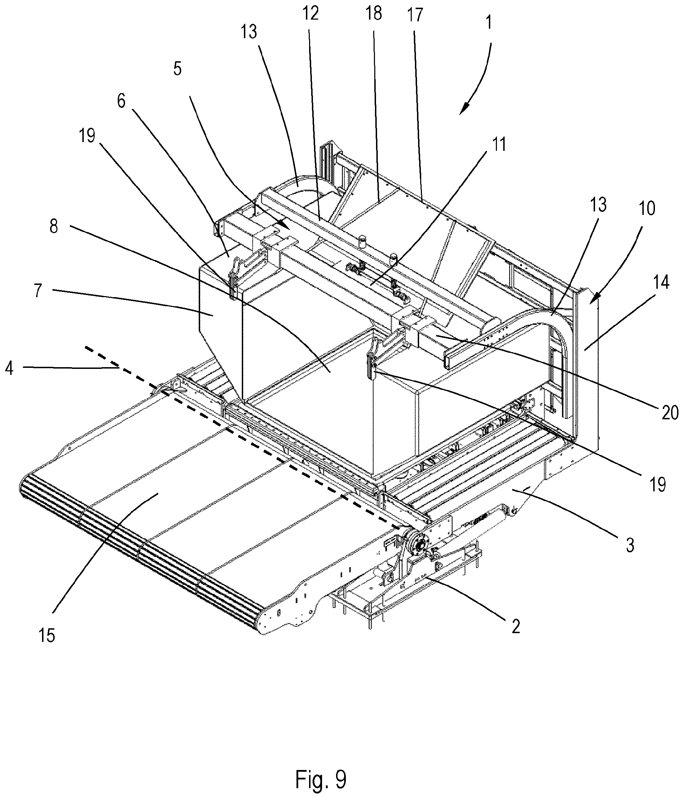

Fig. 9 shows an alternative embodiment of the baggage unloader 1 according to the invention. Parts which correspond to parts in the embodiment as shown in Fig. 6 have the same reference signs. The baggage unloader 1 as shown in Fig. 9 is provided with a retaining member in the form of a pair of hooks including fingers 19 for engaging the front side 7 of the baggage container 5. The hooks are mounted to a profile 20 which is parallel to the beam 12 and mounted to the curved supports 13. The hooks are tiltable with respect to the profile 20 about a tilting axis which is parallel to the axis of rotation 4 such that the fingers 19 are moveable with respect to the platform 3 in a direction to and from the front side 7 of the baggage container 5. The hooks may be operated through drivable cables (not shown) which extend along the curved supports 13, for example. In case of a relatively weak structure of the baggage container 5 the fingers 19 may prevent the baggage container 5 from being deformed during rotation of the baggage container 5 by engaging the front side 7 thereof. It is noted that the profile 20 may be displaceable with respect to the curved supports 13 in order to handle baggage containers 5 which have different dimensions. When the baggage container 5 is placed on the platform 3 the hooks may be tilted upwardly whereas they may be tilted downwardly before tilting the platform 3 and the baggage container 5.

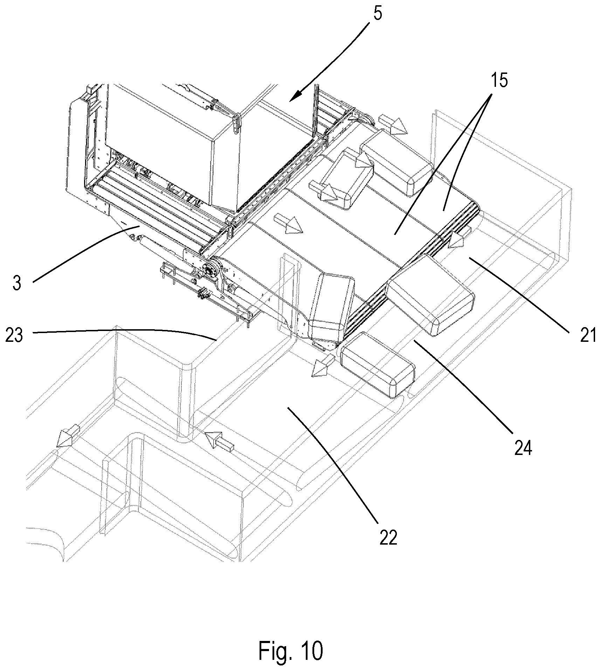

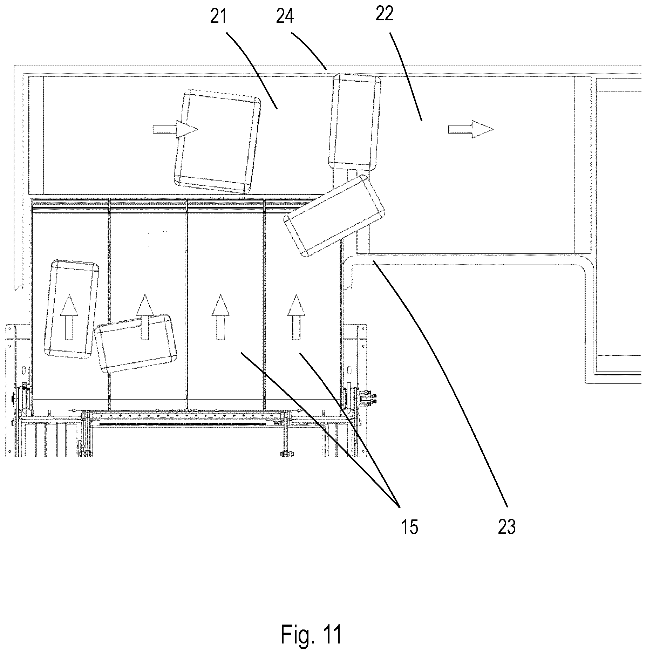

Figs. 10 and 11 illustrate how baggage from the baggage container 5 is transported via the conveyor belts 15 to a transverse conveyor belt 21 and a discharge belt 22. The transverse conveyor belt 21 extends perpendicularly to the conveyor belts 15. The discharge belt 22 is aligned with the transverse conveyor belt 21, but wider than the transverse conveyor belt 21. The discharge belt 22 overlaps a side of an end portion of one of the conveyor belts 15 which is adjacent to the discharge belt 22. The overlap creates a gradual transfer between the mentioned one of the conveyor belts 15, on the one hand, and the transverse conveyor belt 21 and the discharge belt 22, on the other hand. In fact, a funnel-shape rather than a 90° angle between the conveyor belts 15 and the discharge belt 22 is created. This appears to provide a relatively smooth flow of baggage articles at the region where the end portion of the one of the conveyor belts 15, the transverse conveyor belt 21 and the discharge belt 22 meet each other.

Furthermore, an inner side wall 23 extends along the discharge belt 22 at a side thereof which faces the axis of rotation 4 and along a portion of the conveyor belt 15 that is adjacent to the discharge belt 22, whereas an outer side wall 24 extends along the transverse conveyor belt 21 and the discharge belt 22 at a side thereof which is directed away from the axis of rotation 4. The above-mentioned funnel-shape appears to prevent baggage articles from jamming between the inner side wall 23 and the outer side wall 24 at the region where the end portion of the one of the conveyor belts 15, the transverse conveyor belt 21 and the discharge belt 22 meet each other.

The embodiment as shown in Figs. 10 and 11 does not necessarily have the holder 10 or the tiltable conveyor belts 15. In other words, the invention is also related to the following aspects:
Aspect 1: An article transfer system, comprising a first conveyor 15, a second conveyor 21 and a third conveyor 22, wherein the first conveyor 15 extends perpendicular to the second and third conveyors 21, 22, which second and third conveyors 21, 22 are aligned, wherein an end portion of the first conveyor 15 ends at a side of an end portion of the second conveyor 21, wherein an end of the second conveyor 21 at its end portion is adjacent to an end of the third conveyor 22, wherein the end of the third conveyor 22 is also adjacent to a side of the end portion of the first conveyor 15. Hence, an article which is transported on the first conveyor 15 can be further transported in transverse direction by the second conveyor 21 and subsequently by the third conveyor 22. If the article meets another article when a first part of the article arrives on the second conveyor 21, both articles may be transported simultaneously by the second conveyor 21 such that a second part of the article slides in transverse direction on the first conveyor 15, after which the third conveyor 22 can transport both articles together. Since the third conveyor 22 partly overlaps the side of the end portion of the first conveyor 15, colliding articles on the second conveyor 21 are not inclined to get stuck at the region where the end portion of the first conveyor 15, the second conveyor 21 and the third conveyor meet each other.
Aspect 2: An article transfer system according to aspect 1, wherein an inner side wall 23 extends along the third conveyor 22 and a portion of the first conveyor 15 for preventing articles from falling from the first or third conveyors.
Aspect 3: An article transfer system according to aspect 1 or 2, wherein an outer side wall 24 extends along the second and third conveyors 21, 22 at a side thereof which is opposite to the side of the third conveyor where the inner side wall 23 is located.
Aspect 4: An article transfer system according to aspect 2 or 3, wherein at least one of the inner and outer side walls 23, 24 is provided with a drivable guide for displacing articles which contact the drivable guide under operating conditions. For example, the drivable guide may be a rotatable conical roller, a drivable belt or the like.
Aspect 5: An article transfer system according to any one of the preceding aspects, wherein the first conveyor 15 is subdivided into a plurality of parallel conveyors.
Aspect 6: An article transfer system according to aspect 5, wherein the plurality of parallel conveyors 15 are drivable independently from each other.
Aspect 7: An article transfer system according to aspect 6, wherein each of the plurality of parallel conveyors 15 is drivable in opposite directions.
Aspect 9: An article transfer system according to any one of the preceding aspects, wherein at least one of the second conveyor and the third conveyor is drivable in opposite directions.
Aspect 9: An article transfer system according to any one of the preceding aspects, wherein at the region where the end portion of the first conveyor 15, the second conveyor 21 and the third conveyor meet each other the end of the third conveyor is located at a lower height level than the second conveyor 21. This means that the baggage article are dropped onto the third conveyor which helps to separate them from each other.

The invention is not limited to the embodiments shown in the drawings and described hereinbefore, which may be varied in different manners within the scope of the claims and their technical equivalents. For example, the holder may be fixed at a different location of the platform. Furthermore, numerous alternative types of baggage containers are conceivable.

## Claims

1. A baggage unloader (1), comprising a frame (2), a baggage container (5) including an upper side (6) and at least a discharge opening (8) at a front side (7) thereof, wherein the baggage container (5) is provided with a cover (9), e.g. a flexible sheet, for closing at least a part of the discharge opening (8), the cover (9) being placeable on the upper side (6), or with a tiltable rigid lid (17) for covering an opening of the baggage container which rigid lid (17) projects outwardly from the baggage container (5) in an open position of the rigid lid (17), a platform (3) for receiving the baggage container (5) thereon, which platform (3) is mounted to the frame (2) and rotatable with respect to the frame (2) between a horizontal position and an inclined position about an axis of rotation (4) which extends at a discharge side of the platform (3), wherein the baggage container (5) is transferable to and from the platform (3) and lockable to the platform (3) in a position in which the discharge opening (8) is located at the discharge side so as to be able to rotate the platform (3) and the baggage container (5) together, wherein the platform (3) is provided with a holder (10) for holding the rigid lid (17) in its open position or the cover (9) at the upper side (6) of the baggage container (5) when the platform (3) including the baggage container (5) are rotated together, wherein during rotation of the platform (3) and the baggage container (5) the holder (10) and the baggage container (5) move within imaginary first and second circles (C1, C2) about the axis of rotation (4), respectively, **characterized in that** the radius of the first circle (C1) is smaller than 1.2 or 1.1 times the radius of the second circle (C2).

2. A baggage unloader (1) according to claim 1, wherein the radius of the first circle (C1) is smaller than the radius of the second circle (C2).

3. A baggage unloader (1) according to claim 1 or 2, wherein the radius of the second circle (C2) is defined by a rim (16) between the upper side (6) and a back side of the baggage container (5) in case the baggage container (5) is provided with the cover (9), wherein the radius of the second circle (C2) is defined by a free end of the outwardly projecting rigid lid (17) in its open position in case the baggage container (5) is provided with the rigid lid (17).

4. A baggage unloader (1) according to any one of the preceding claims, wherein the holder (10) has a holding element (11, 12) for engaging the cover (9) or the rigid lid (17).

5. A baggage unloader (1) according to claim 4, wherein the holding element (11, 12) is displaceable with respect to the platform (3).

6. A baggage unloader (1) according to claim 5, wherein the holding element (11, 12) is displaceable with respect to the platform (3) in a direction perpendicular to the platform (3).

7. A baggage unloader (1) according to any one of the claims 4-6, wherein the holding element (12) is shaped such that the rigid lid (17) hooks behind the holding element (12) during tilting the platform (3).

8. A baggage unloader (1) according to any one of the claims 4-7, wherein the holder (10) is provided with a post (14) which extends upwardly from the platform (3) at a distance from the axis of rotation (4) and the holding element (11, 12) is provided at a distance from an upper end of the post (14) in a direction towards the discharge side of the platform (3) through a support (13) which is mounted to the post (14), wherein preferably the support comprises a curved support which has a height which increases in a direction from the post (14).

9. A baggage unloader (1) according to claim 8, wherein the support (13) is movable along the post (14) between a lower position and an upper position so as to displace the holding element (11, 12) with respect to the platform in a direction perpendicular to the platform (3).

10. A baggage unloader (1) according to claim 9, wherein the support (13) extends at least partly beyond the baggage container (5) in its lower position as seen from the baggage container (5) in a direction along the axis of rotation (4).

11. A baggage unloader (1) according to any one of the preceding claims, wherein the rigid lid (17) is tiltable between the open position and a closed position about a tilting axis which is parallel to the axis of rotation (4) of the platform (3).

12. A baggage unloader (1) according to claim **11,**
wherein the rigid lid (17) closes at least an opening at an upper side (6) of the baggage container (5) in its closed position.

13. A baggage unloader (1) according to any one of the preceding claims, wherein the baggage container (5) is transferable to and from the platform (3) in a direction parallel to the axis of rotation (4).

14. A baggage unloader (1) according to any one of the preceding claims, wherein the holder (10) is provided with at least a retaining member (19) for engaging the front side (7) of the baggage container (5).

15. A baggage unloader (1) according to claim **14,**
wherein the retaining member (19) is moveable with respect to the platform (3) in a direction to and from the front side (7) of the baggage container (5).
